# EUROPEAN PATENT APPLICATION

(11) **EP 2 664 589 A1**
(43) Date of publication of application: **20.11.2013**
(21) Application number: 12168036.7
(22) Date of filing: 15.05.2012
(51) Int. Cl.: C03B 19/02, C03B 19/10, B44C 5/00, C03B 11/14

(54) **A method and a device of manufacturing an object of glass with at least one three-dimensional figurine enclosed therein**

(71) Applicant: Ceraglass patenten B.V., 2311 EV Leiden (NL)
(72) Inventor: ZANDVLIET, Johannes Maria, 2242 CZ Wassenaar (NL)
(74) Representative: De Vries & Metman

(57) **Abstract**

A method of manufacturing an object of glass (2) with at least one three-dimensional figurine (F) enclosed therein, comprises the steps of pouring soft glass (2) into a mould cavity (9) and inserting a heated figurine (F) into the glass (2). The glass temperature is higher than 1000 °C when inserting the figurine (F).

## Description

The present invention pertains to a method of manufacturing an object of glass with at least one three-dimensional figurine enclosed therein.

Such a method is known from WO 99/33754. In the prior art method spherical glass articles including figurines are manufactured by successive steps of filling a bottom mould with a droplet of glass, supplying a figurine and pouring another droplet on the figurine and the already present glass. The glass article is then stamped to a spherical shape.

It is an object of the invention to provide a new method for manufacturing an object of glass with a three-dimensional figurine enclosed therein.

This is achieved with the method according to the invention which comprises the steps of pouring soft glass into a mould cavity and inserting a heated figurine into the glass, wherein the glass temperature is higher than 1000 °C when inserting the figurine.

Due to the relatively high temperature of the glass in the mould cavity its viscosity is still relatively low. As a consequence, the molten glass yield around the figurine rather easily. Furthermore, inserting the figurine into the glass requires relatively little pressure, which provides the opportunity to insert the figurine into the glass at relatively high speed. This results in increased manufacturing speed. In order to prevent the figurine from degradation due to a too high temperature difference, such as cracking, the figurine is pre-heated before being inserted into the glass.

The figurine may be heated to a temperature below the actual glass -temperature in the mould cavity. This requires less heating of the figurines than in prior art manufacturing methods.

The glass temperature may be higher than 1100 °C or 1150 °C, and preferably higher than 1250 °C when inserting the figurine. This creates a still lower viscosity causing improved yielding characteristics of the glass around the figurine.

In a practical embodiment the glass temperature is in the range of 1100-1300 °C and the figurine temperature is below 1000 °C upon inserting the figurine into the glass. This is possible until the glass is still not fully cured.

In a specific embodiment the glass including the figurine is pressed substantially to a desired shape after the step of inserting the figurine into the glass.

The invention is also related to a method of manufacturing an object of glass with at least one three-dimensional figurine enclosed therein, comprising the steps of pouring soft glass into a mould cavity and inserting a heated figurine into the glass, wherein the viscosity of the glass is lower than 10⁴ Pa.s when inserting the figurine, and preferably lower than 10³ Pa.s.

The three-dimensional figurine may be composed of metal salts and/or metal oxides and the composition as oxide is a) 20 - 60 wt. % of SiO2, b) 2.5 - 30 wt. % of A1203, and c) 30 - 65 wt. % of an oxide of Mg, Ca, and/or Ba, and wherein the sum of a+b+c > 95 wt. %, and if there is a difference with 100 wt.%, this difference stands for metal oxides of metals other than Si, Al, Mg, Ca, or Ba, wherein the weight percentage is determined with regard to the total of the oxides. Examples of such metals are iron (II), iron (III), potassium, sodium, lithium, zinc, copper, lead, antimony, zirconium, strontium, arsenic, manganese, titanium, phosphorus (that is also considered as a metal), and the like. In view of this it is remarked that all non-gaseous oxides can be part of the composition in small amounts. Preferably, none of these other metal oxides occur in an amount above 1 wt. %. The total content of these other metal oxides is always smaller than 5 wt. %.

Alternatively, the three-dimensional figurine may be composed of metal salts and/or metal oxides and the composition as oxide is a) 30 - 40 wt. % of Si02, b) 5 - 10 wt. % of A1203, and c) 50 - 60 wt. % of an oxide of Mg, Ca, and/or Ba, and wherein the sum of a+b+c > 95 wt. %, and if there is a difference with 100 wt.%, this difference stands for metal oxides of metals other than Si, Al, Mg, Ca, or Ba, wherein the weight percentage is determined with regard to the total of the oxides.

The glass may be any sort of glass. Because of the price and the ease of handling it is preferred to use soda lime glass. Such glass comprises 70-78 wt. % of silicon oxide, 10-18 wt. % of sodium oxide, 4-12 wt. % of calcium oxide, 0.1-5 wt. % of potassium oxide, and small amounts of different oxides. A suitable glass is for instance the sodium lime glass with 76 wt. % of silicon oxide, 16 wt. % of sodium oxide, 6 wt. % of calcium oxide, and 2 wt. % of potassium oxide. A different suitable glass comprises 72.5 wt. % of silicon oxide, 13.6 wt. % of sodium oxide, 8.8 wt. % of calcium oxide, 0.6 wt. % of potassium oxide, 2 wt. % of aluminium oxide, 1.9 wt. % of magnesium oxide, 0.08 wt. % of iron (III) oxide, 0.6 wt. % of antimony (III) oxide, and 0.01 wt. % of titanium oxide. Nevertheless glass having different compositions is conceivable, for example glass comprising 72-77 wt. % of silicon oxide, 11-13 wt. % of sodium oxide, 3-5 wt. % of calcium oxide, 2-3 wt. % of potassium oxide, 2-4 wt% B2O3, 0.5 -2 wt% Al2O3, 1-3 wt% BaO, and small amounts of different oxides.

The glass may be a so-called hard glass. For example, a typical hard glass is borosilicate glass with low thermal expansion coefficient, in the order of 3.3x10⁻⁶K⁻¹. This glass is hard for melting, it is the Pyrex type. The composition is well known and the typical contents of SiO2 is about 80%. Generally the hardness of the glass depends on the amount of SiO2 in the glass. Preferably, the content of SiO2 in the glass is higher than 50% and more preferably higher than 70%.

The invention is also related to a device for manufacturing an object of glass with a three-dimensional figurine enclosed therein, comprising a mould assembly provided with a mould cavity whose shape corresponds at least substantially to the shape of the intended object and a feeder including a glass discharge for supplying molten glass to the mould assembly, wherein said mould assembly is provided with a filling opening for filling the mould cavity with molten glass and an insertion opening for inserting the figurine into the mould cavity, wherein the glass discharge is located directly above the filling opening.

The device according to the invention prevents the glass from severe cooling between the glass discharge and the mould assembly.

The distance between the glass discharge and the mould assembly may be less than 0.5 m, and preferably less than 0.25 m. In a prior art method the glass that leaves the glass discharge has a temperature of about 1100 °C, but has to travel about 3m through a chute before arriving at a mould. Therefore, the glass will be cooled down below 1000 °C upon entry of the mould.

The device may be arranged such that the temperature of the glass in the mould cavity after filling is higher than 1000 °C. This can be achieved, for example, by a short distance between the glass discharge and the mould assembly as mentioned above, and/or by heating the molten glass to a relatively high temperature at the feeder. An elevated glass temperature results in decreased viscosity such that the glass flow between the glass discharge and the mould assembly is relatively narrow. Consequently, the filling opening may be narrow, as well.

The figurine may have any shape, for example a disk shape, and may also carry a message for advertising, for example.

The invention will hereafter be elucidated with reference to drawings showing embodiments of the invention very schematically.
Fig. 1 is a cut-away perspective view of a continuously operating glass furnace.
Fig. 2 is a cross-sectional view of a mould assembly which is used for making an object by means of an embodiment of the method according to the invention.
Figs. 3-6 are similar views as Fig. 2, but showing different conditions in the manufacturing process.
Fig. 7 is a cross-sectional view of a product that is manufactured by means of the mould assembly as shown in Figs. 2-6.

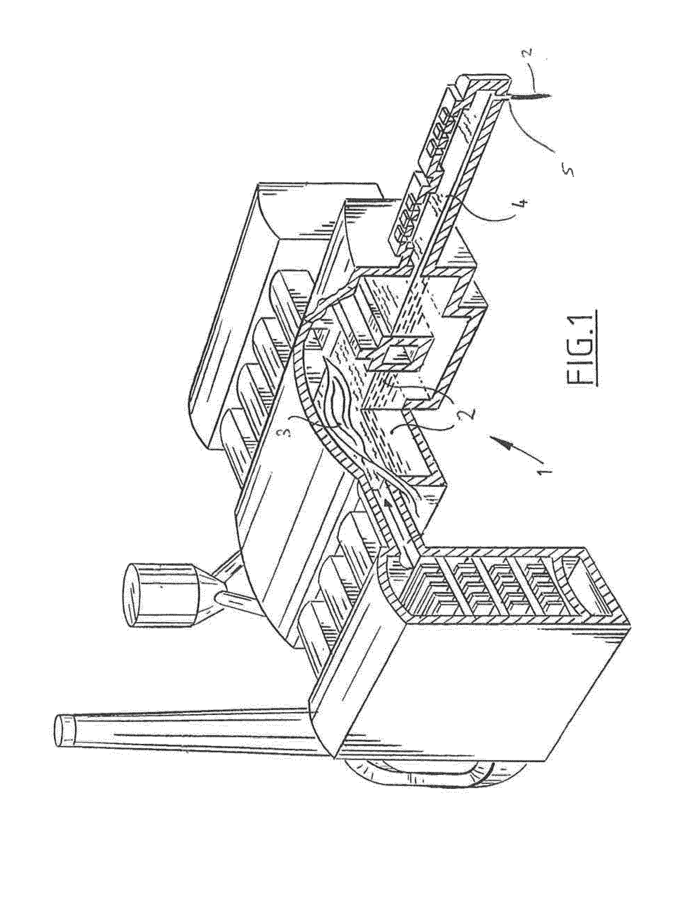

Fig. 1 shows a continuously operating glass furnace 1, which contains a mass of molten glass 2. The glass 2 is heated by means of flames 3. Under operating conditions the molten glass 2 flows through a feeder 4 to a glass discharge 5. The glass 2 may be heated to a temperature of 1100-1700 °C, in practice about 1300 °C. This means that the glass temperature upon leaving the glass discharge 5 may have a temperature of about 1300 °C. At this temperature the viscosity of the molten glass is rather low such that a flow of molten glass 2 below the glass discharge 5 is relatively narrow.

The flow of glass 2 that leaves the glass discharge 5 is received by a mould assembly 6 which is located just below the glass discharge 5. The distance between the glass discharge 5 and the mould assembly 6 is preferably smaller than 0.25 m in order to minimize cooling of the glass 2 before it arrives at the mould assembly 6. When an amount of glass 2 is poured into the mould cavity 9 the glass flow at the glass discharge 5 is stopped shortly and a next mould assembly 6 is positioned below the glass discharge 5 such that the glass flow may be started again.

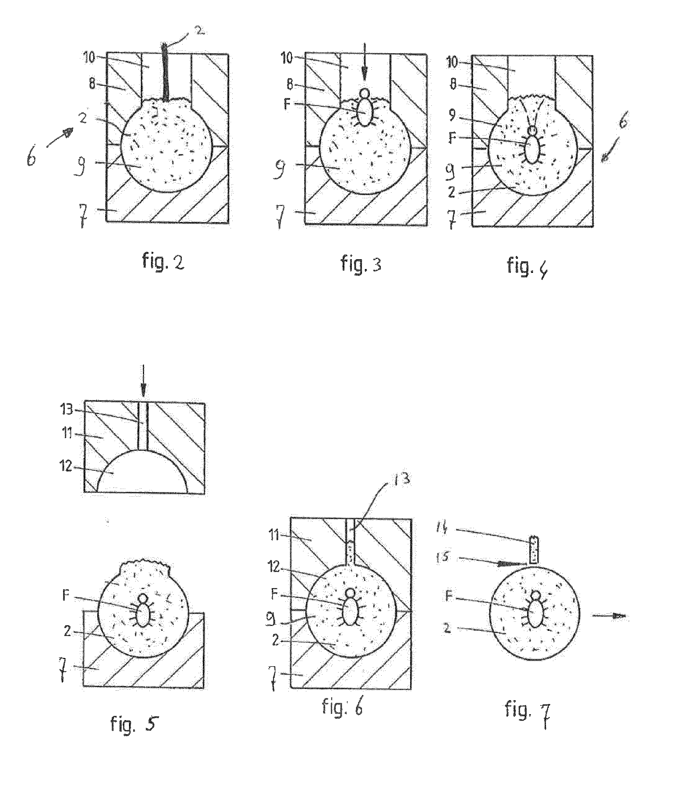

Fig. 2 shows an embodiment of a mould assembly 6 for making an object of glass in the form of a marble with a three-dimensional figurine enclosed therein. The mould assembly 6 includes a lower mould 7 and an upper mould 8, which together form a mould cavity 9. The upper mould 8 is provided with a filling hole 10 for filling the mould cavity 9 with soft glass 2. Fig. 2 illustrates a condition in which the mould cavity 9 is filled with soft glass 2. In this condition the glass temperature is still above 1000 °C.

In a next step, possibly after filling of the mould cavity 9 with glass 2 has stopped, a figurine F is inserted into the soft glass 2 via the same filling hole 10. Fig. 3 illustrates how the figurine F is inserted into the glass 2. This may be performed at relatively high speed. Since in this case the viscosity of the glass 2 is still relatively low a relatively low pressure is required for inserting the figuring F into the glass 2. The figurine F may have any three-dimensional shape and is made of a material which preferably has a coefficient of expansion in the range of that of the glass 2, often a ceramic material. Depending on the size of the figurine F in relation to the size of the mould cavity 9 the filling hole 10 may be wider or narrower than shown in Fig. 3.

Before the figurine F is inserted into the glass 2 it is pre-heated in order to avoid a large temperature difference between the glass 2 and the figurine F which may cause degradation of the figurine F, for example cracking. Contrary to known prior art manufacturing processes the figurine F is pre-heated to a temperature which is below the actual glass temperature upon inserting it into the glass 2. Due to the relatively high glass temperature, above 1000 °C or 1100 °C and preferably above 1200 °C, in the mould cavity 9 the viscosity of the glass 2 is still low and the glass appears to yield around the figurine F accurately. Furthermore, formation of air inclusions appears to be minimized. In practice, a ceramic figurine F is pre-heated to a temperature above 500 °C and below 1000 °C.

Fig. 4 illustrates that due to the presence of the figurine F in the mould cavity 9 the glass level in the upper mould 8 has increased with respect to the condition as shown in Fig. 3.

It is noted that in the embodiment as illustrated in Figs. 2-4 the glass 2 and the figurine F are supplied to the mould cavity 9 via the same filling hole 10. In an alternative embodiment separate openings for supplying the glass 2 and the figurine F, respectively, to the mould cavity 9 are conceivable.

In the condition as illustrated in Fig. 5 the upper mould 8 has been removed and a new upper mould 11 has been supplied. The new upper mould 11 includes a hemispherical mould cavity 12 and an escape hole 13 having a smaller diameter than the filling hole 10 of the upper mould 8. The diameter of the escape hole 13 is selected in dependence on the volume of the figurine F that is to be inserted into the glass 2; the larger the volume of the figurine F, the larger the diameter of escape hole 13.

When the new upper mould 11 is pressed onto the lower mould 7, as is shown in Fig. 6, the resulting glass marble 2, which is too large, is compressed. The glass 2 is pressed fully against figurine F. The air that may be present is forced out. The glass above figurine F is closed and the excess glass is discharged, likewise at the upper side, via narrow escape hole 13. Since the hole is narrow, the pressure within the mould cavity 9 can nevertheless run up high. Subsequently, the new upper mould 11 is opened again and a pillar of abundant glass 14 from the escape hole 13 is cut off by cutting means 15, see Fig. 7.

It is noted that the discharge 5 at the feeder 4 may be controlled accurately, such that an amount of glass 2 is poured into the mould assembly 6, which amount of glass 2 substantially equals the amount of glass necessary for the final object. With reference to Fig. 7, the amount of glass 2 is controlled such that the pillar of abundant glass 14 does not arise in this case. The amount of glass is controlled in dependence of the volume of the figurine F. In case of such an accurate discharge control, it is even conceivable to eliminate the escape hole 13, as shown in Fig. 5 and 6.

The glass marble 2 is placed on a roller (not shown), which has a length of about 1 to 15 m. At the end of the roller, the marbles move into an annealing furnace. In this furnace, the marbles are annealed for a long period in order to fully eliminate any stresses in the glass 2 surrounding figurine F. After leaving the annealing furnace the glass marbles 2 may be placed, as an optional step, on the roller again and be rolled into a perfectly round shape. Preferably, the marbles are partially reheated before being placed again on the roller.

Alternatively, it is conceivable to grind and polish the hardened and cooled marbles by tumbling them in a tumbler to obtain a perfectly round and polished marble. Such tumblers are known per se for shaping and finishing gemstones and the like. In this embodiment a roller is not used.

A further alternative for finishing the marbles is to process them in a bead fine grinding machine and/or a bead calibrating machine (for example model KF and/or model KKM from LUX + CO. KG). Polishing may be done by the above mentioned tumbling process again or by "flame polishing" on a roller.

From the foregoing it will be apparent that the invention provides a method and a device by means of which an object of glass with a figurine enclosed therein can be manufactured. The method can be carried manually or automatically to a smaller or larger extent, but in principle it is also possible to carry out the entire method by hand.

The invention is not restricted to the above-described embodiment as shown in the drawings, which can be varied in several ways without departing from the scope of the invention. Thus it is possible to use an adjustable mould or the like and a vacuum system instead of various upper moulds. Furthermore, it is possible to insert several figurines, simultaneously or in succession, into the glass of the object at the same location or at different locations. Pressing a heated figurine into the glass and pressing the amount of glass with the figurine present therein substantially to a desired shape may also be done substantially simultaneously, or in a succession without changing the upper mould part but by movable mould parts.

## Claims

1. A method of manufacturing an object of glass (2) with at least one three-dimensional figurine (F) enclosed therein, comprising the steps of pouring soft glass (2) into a mould cavity (9) and inserting a heated figurine (F) into the glass (2), wherein the glass temperature is higher than 1000 °C when inserting the figurine (F).

2. A method according to claim 1, wherein the glass temperature is higher than 1150 °C, and preferably higher than 1250 °C when inserting the figurine (F).

3. A method according to claim 1 or 2, wherein the figurine (F) is heated before being inserted into the glass (2) to a temperature below the actual glass temperature in the mould cavity (9).

4. A method according to one of the preceding claims, wherein upon inserting the figurine (F) into the glass (2), the glass temperature is in the range of 1100-1300 °C and the figurine temperature is below 1000 °C.

5. A method according to one of the preceding claims, wherein the mould cavity (9) is formed by a mould assembly (6) comprising a lower mould (7) and an upper mould (8), wherein the upper mould (8) is provided with a filling hole (10) through which the glass (2) is poured into the mould cavity (9).

6. A method according to claim 5, wherein the figurine (F) is inserted into the glass (2) through the filling hole (10).

7. A method according to one of the preceding claims, wherein after the step of inserting the figurine (F) into the glass (2), the glass (2) including the figurine (F) is pressed substantially to a desired shape.

8. A method of manufacturing an object of glass (2) with at least one three-dimensional figurine (F) enclosed therein, comprising the steps of pouring soft glass (2) into a mould cavity (9) and inserting a heated figurine (F) into the glass (2), wherein the viscosity of the glass is lower than 10⁴ Pa.s when inserting the figurine (F), and preferably lower than 10³ Pa.s.

9. A method according to one of the preceding claims, wherein the three-dimensional figurine (F) is composed of metal salts and/or metal oxides and the composition as oxide is:
a) 20 - 60 wt. % of SiO2,
b) 2.5 - 30 wt. % of Al203, and
c) 30 - 65 wt. % of an oxide of Mg, Ca, and/or Ba, wherein the sum of a+b+c > 95 wt. %, and if there is a difference with 100 wt.%, this difference stands for metal oxides of metals other than Si, Al, Mg, Ca, or Ba, wherein the weight percentage is determined with regard to the total of the oxides.

10. A device for manufacturing an object of glass (2) with a three-dimensional figurine (F) enclosed therein, comprising a mould assembly (6) provided with a mould cavity (9) whose shape corresponds at least substantially to the shape of the intended object and a feeder (4) including a glass discharge (5) for supplying molten glass (2) to the mould assembly (6), wherein said mould assembly (6) is provided with a filling opening (10) for filling the mould cavity (9) with molten glass (2) and an insertion opening (10) for inserting the figurine (F) into the mould cavity (9), wherein the glass discharge (5) is located directly above the filling opening (10).

11. A device according to claim 10, wherein the distance between the glass discharge (5) and the mould assembly (6) is less than 0.5 m, preferably less than 0.25 m.

12. A device according to claim 10 or 11, wherein the filling opening and the insertion opening comprise a common opening (10).

13. A device according to one of the claims 10-12,
wherein the device is arranged such that the temperature of the glass (2) after filling the mould cavity (9) is higher than 1000 °C.
